# EUROPEAN PATENT SPECIFICATION

(11) **EP 2 017 499 B1**
(45) Date of publication and mention of the grant of the patent: **09.02.2011**
(21) Application number: 08252454.7
(22) Date of filing: 18.07.2008
(51) Int. Cl.: F16H 57/04, F01M 9/08, F02B 61/02, F02B 75/16

(54) **Engine**
Motor
Moteur

(30) Priority: 20.07.2007 JP 2007189227
(43) Date of publication of application: 21.01.2009
(73) Proprietor: Yamaha Hatsudoki Kabushiki Kaisha, Shizuoka-ken Shizuoka 438-8501 (JP)
(72) Inventor: Masuda, Tatsuya c/o Yamaha Hatsudoki Kabushiki Kaisha, Iwata-shi, Shizuoka-ken 438-8501 (JP); Nakashima, Hiroyuki c/o Yamaha Hatsudoki Kabushiki Kaisha, Iwata-shi, Shizuoka-ken 438-8501 (JP)
(74) Representative: Lamb, Martin John Carstairs

(56) References cited:
- EP-A- 1 498 592
- WO-A-2008/120243
- JP-A- 2002 168 327
- US-A1- 2003 196 510

## Description

### FIELD OF THE INVENTION

The present invention relates to an engine, and in particular to an engine in which oil displaced or scattered by a crank web of a crank shaft is utilized for lubrication of a transmission.

### BACKGROUND TO THE INVENTION

JP-B-6-27494 discloses a known engine constructed such that oil is sprayed onto a transmission in a crank case The engine disclosed in the JP-B-6-27494 is mounted on a motorcycle and comprises a crank case, which rotatably supports a crank shaft, and a forward tilting cylinder projecting generally toward the front of a vehicle body from the crank case.

A transmission is provided rearwardly of a crank shaft within the crank case to align with the crank shaft in a longitudinal direction of the vehicle body. The transmission includes two transmission shafts comprising a main shaft and a drive shaft and is constructed such that a part of a plurality of gears provided on the main shaft and a plurality of gears provided on the drive shaft are moved in an axial direction and speed change is achieved by changing a gear used for power transmission. A shift fork for movement of the gear in an axial direction is positioned below the gear.

In this known engine, a pipe for oil supply is provided transversely in a region above the gear in the crank case. One end of the pipe is connected to an oil passage formed in a central portion of the main shaft through an oil passage in a crank case side wall and the other end is connected to an oil passage formed in a central portion of the drive shaft through an oil passage in the crank case side wall. That is, oil passing through the oil passage in the drive shaft is supplied to the pipe.

The pipe is formed with a plurality of oil jet ports opened to an outer peripheral surface thereof. A quantity of oil supplied to the pipe is jetted outside the pipe from the oil jet ports and sprayed onto a plurality of gears of the transmission from above. The oil is sprayed onto the gears whereby meshing portions of the gears are lubricated. Also, oil dripping from the gears adheres to the shift fork to lubricate portions of the shift fork which are required to be lubricated.

Further reduction in cost and further miniaturization of a crank case are demanded of engines including engines for motorcycles.

However, the known engine described above could not meet such demand. This is because the engine described above uses a pipe, which sprays oil, exclusively. That is, this is because with the above described engine, the crank case becomes large in size corresponding to a space, through which the pipe extends, and parts are many in number corresponding to the pipe to lead to an increase in manufacturing cost.

EP1498592 describes an engine comprising a V-belt type continuously variable transmission on one side of an engine case. Lubricant oil is drawn up by an oil pump and supplied via an oil passage to a connecting bearing portion, where a crankpin and a connecting rod are interconnected. The lubricant oil supplied to the connecting bearing portion is spread within the crank chamber by oil pressure and centrifugal force of the crankshaft. Part of the spread lubricant oil enters the reduction chamber to lubricate the secondary reduction small gear and the secondary reduction large gear and falls into a lubricant oil chamber. A structure, whose function is not described, is provided lower than the crankpin.

The invention has been thought of in order to alleviate such a problem and has its object to provide an engine, in which it is possible to simply spray oil onto a transmission without the use of an exclusive part such as pipe, etc.

### SUMMARY OF THE INVENTION

Various aspects of the present invention are defined in the independent claims. Some preferred features are defined in the dependent claims.

Described herein is an engine comprising:
a crank case;
a crank shaft rotatably supported in the crank case and having a crank web; and
a transmission including a transmission gear,
wherein the crank case comprises:
   a first transverse wall positioned below and in the vicinity of the crank web and curved along an outer peripheral surface of the crank web, wherein the crank shaft rotates in a direction in which the crank web is moved toward the transmission from the first transverse wall;
   a second transverse wall positioned above and in the vicinity of the transmission gear to cover an upper portion of the transmission gear, wherein the second transverse wall is formed with a projection; and
   an oil scattered space extending between the first and
second transverse walls in the vicinity of an outer peripheral surface of the crank web.

The projection may extend downwardly from the second transverse wall.

The first transverse wall may define a partition which compartments an interior of the crank case into a first compartment located toward the crank web and a second compartment located toward an oil pan.

The second transverse wall may be positioned interiorly of the crank case relative to an outer wall of the crank case, and a space may be defined between the second transverse wall and the outer wall. The space may constitute a breather chamber for separation of oil from blow-by gases.

The projection may be positioned toward the rear of the engine. The transmission gear may rotate in a direction in which a topmost portion of the transmission gear moves toward the rear of the engine.

The transmission gear may be spline-fitted onto and supported on a transmission shaft to be movable in an axial direction and formed with a groove adapted to be engaged by a shift fork. The projection may be positioned above and in the vicinity of a region in which the shift fork engages the groove.

The engine may comprise first and second intermeshing gears, wherein the first and second gears may be arranged to align in a longitudinal direction of the engine.

The second transverse wall may be formed to extend in the longitudinal direction of the engine from above and the vicinity of meshing portions of the gears. The projection may be positioned above and in the vicinity of the meshing portions of the gears.

An end of the second transverse wall toward the rear of the engine may be connected to an outer wall of the crank case extending in an engine width direction. The second transverse wall and the outer wall may be formed in a shape to surround an upper portion of the second transmission gear from above and behind.

The engine may further comprise a cylinder extending form the crank case. The cylinder may extend forwardly from the crank case.

Described herein is an engine comprising a crank case, which supports a crank shaft rotatably, a forward tilting cylinder projecting toward substantially the front of a vehicle body from the crank case, a transmission shaft provided toward the rear of the vehicle body relative to the crank shaft to be made parallel to the crank shaft, and a transmission gear provided on the transmission shaft, and wherein the crank case is formed with a first transverse wall, which is positioned below and in the vicinity of a crank web and curved along an outer peripheral surface of the crank web, a second transverse wall, which is positioned above and in the vicinity of the transmission gear to cover an upper portion of the transmission gear, and an oil scattered space formed to extend to the second transverse wall from the first transverse wall in the vicinity of an outer peripheral surface of the crank web, the second transverse wall is formed with a downwardly projecting projection, and the crank shaft rotates in a direction, in which the crank web is moved toward the transmission from the first transverse wall.

oil lubricating portions to be lubricated such as the crank shaft, the connecting rod, the piston, etc. in engine operation goes along the wall of the crank case as it is liquid to flow down, or becomes misty to drop in the crank case. A part of the oil flows down to or falls on the first transverse wall to stay on the first transverse wall.

The oil on the first transverse wall comes into contact with the rotating crank web when its liquid level rises to substantially the same level as a lower end of the crank web. Since the crank web rotates at high speed, oil on the first transverse wall, which comes into contact with the crank web, is flown rearwardly upwardly in the oil scattered space by a centrifugal force. On the other hand, oil coming into contact with the crank web in the course of dropping, out of oil becoming misty and drifting in the crank case is also flown around the crank web by a centrifugal force to flow down adhering to the first transverse wall and an inner wall of the crank case, or is flown rearwardly upwardly in the oil scattered space together with oil flown from above the first transverse wall as described above.

A part of oil flown into the oil scattered space adheres directly to the transmission gear and the remaining oil passes between the transmission gear and the crank web to strike against the second transverse wall to adhere thereto. The oil adhering to the second transverse wall is collected on the projection by gravity and drips from the projection.

The oil dripping from the projection in this manner strikes against teeth of the transmission gear positioned below the projection to lubricate the teeth and teeth of a further gear, which meshes with the teeth.

Accordingly, oil discharged into the crank case to flow down onto the first transverse wall is caused by rotation of the crank web to adhere to the second transverse wall and the oil is caused to drip onto the transmission gear from the projection of the second transverse wall, thereby enabling lubricating the transmission gear.

Therefore, as compared with a conventional engine, in which oil spraying part such as a pipe formed separately from a crank case is used to spray oil onto a transmission, it is possible to achieve miniaturization by an extent corresponding to a space occupied by the part and it is possible to achieve reduction in manufacturing cost owing to a decrease in the number of parts.

Consequently, it is possible to provide an engine, which restricts wear of the transmission gear in spite of being small in size and inexpensive.

The first transverse wall may be formed as a partition, which compartments an interior of the crank case into one toward the crank web and one toward an oil pan.

The first transverse wall inhibits oil stored in the oil pan from flowing toward the crank web. Therefore, the crank web does not agitate oil unnecessarily and it is possible to reduce power loss, because the crank web agitates oil.

The second transverse wall may be positioned interiorly of the crank case relative to an outer wall of the crank case, and a space is defined between the second transverse wall and the outer wall.

The space defined between the second transverse wall and the outer wall of the crank case substantially functions as a space for heat insulation. Therefore, since the second transverse wall and oil adhering to the second transverse wall can be maintained at a predetermined temperature while the engine operates, oil adhering to the second transverse wall is prevented from being cooled excessively to become unnecessarily high in viscosity.

Consequently, oil adhering to the second transverse wall adheres to the second transverse wall and immediately thereafter flows down toward the projection, so that oil does not solidify in a state of adhering to the second transverse wall and a substantially whole quantity of oil adhering to the second transverse wall is enabled to drip onto the gear.

Therefore, it is possible to provide an engine, in which wear of the transmission gear is further restricted.

The space may constitute a breather chamber for separation of oil from blow-by gases.

According to the invention of claim 5, the first transverse wall is made use of to form a wall of the breather chamber, so that it is possible to achieve miniaturization of the crank case as compared with the case where these walls are formed respectively.

The projection may be positioned toward the rear of the vehicle body relative to an axis of the transmission shaft as viewed in an axial direction of the transmission shaft, and the transmission gear may rotate in a direction, in which a topmost portion of the transmission gear moves toward the rear of the vehicle body.

Oil dripping from the projection of the second transverse wall adheres to a side of the transmission gear toward the rear of a vehicle relative to a topmost portion thereof. At this time, those teeth, to which oil adheres, move downward owing to rotation of the transmission gear, so that oil dripping from the projection is made hard to splash when striking against the teeth. Therefore, it is possible to surely have oil, which has dripped from the projection of the second transverse wall, adhering to teeth of the transmission gear, so that it is possible to provide an engine, in which wear of the transmission gear is further restricted.

The transmission gear may be spline-fitted onto and supported on the transmission shaft to be movable in an axial direction and formed with a groove, with which a shift fork engages, and the projection may be positioned above and in the vicinity of a region, in which the shift fork and the groove engages together.

Oil dripping from the projection of the second transverse wall adheres to a region, in which the shift fork and the groove of the transmission gear engage with each other, and to a spline-coupled region, in which the transmission gear and the transmission shaft are spline-coupled, to lubricate the sliding regions. Therefore, it is possible to provide an engine, in which wear in the engaged region and the spline-coupled region can be restricted.

The transmission gear and a further transmission gear, which meshes with the transmission gear, may be provided to align in a longitudinal direction of the vehicle body Both gears may rotate in a direction, in which upper teeth of the both gears approach each other, the second transverse wall is formed to extend in the longitudinal direction of the vehicle body from above and the vicinity of meshing portions of the both gears, and the projection is positioned above and in the vicinity of the meshing portions.

Oil dripping from the projection of the second transverse wall is bitten by meshing portions of two transmission gears to lubricate regions, in which teeth and teeth contact with each other.

Therefore, meshing portions of two transmission gears can be lubricated directly by oil, so that it is possible to provide an engine, in which wear of the both gears is further restricted.

An end of the second transverse wall toward the rear of the vehicle body may be connected to an outer wall of the crank case extending in a vehicle width direction, and the second transverse wall and the outer wall may be formed in a shape to surround an upper portion of the further transmission gear from above and behind.

According to the invention of claim 12, the further transmission gear rotates at high speed whereby a part of oil having adhered to the transmission gear is flown by a centrifugal force to adhere to the second transverse wall and the outer wall of the crank case. Oil adhering to the walls drips therefrom to strike against the further transmission gear and is further flown rearward in a direction of rotation by the gear, which rotate at high speed. Consequently, the oil moves between the further transmission gear and the both walls rearward in the direction of rotation and is again led to meshing portions.

Therefore, according to the embodiment, since oil having dripped from the projection of the second transverse wall to lubricate the transmission gear and the further transmission gear can be again made use of to adequately lubricate the both gears, it is possible to provide an engine, in which the both gears are further hard to wear.

Described herein is a vehicle comprising an engine as described above.

### BRIEF DESCRIPTION OF THE DRAWINGS

These and other aspects of the present invention will now be described, by way of example only, with reference to the accompanying drawings, in which:
Fig. 1 is a longitudinal, cross sectional view showing an engine according to an embodiment of the invention;
Fig. 2 is a cross sectional view showing, in enlarged scale, a part of Fig. 1;
Fig. 3 is a transverse, cross sectional view showing an essential part of the engine according to the invention;
Fig. 4 is a cross sectional view showing a region, in which a first transverse wall is formed, in a crank case;
Fig. 5 is a perspective view showing a state, in which a half of the crank case on the right of a vehicle body is viewed from a center of the vehicle body; and
Fig. 6 is a perspective view showing a state, in which a half of the crank case on the left of the vehicle body is viewed from a center of the vehicle body.

### DETAILED DESCRIPTION OF THE DRAWINGS

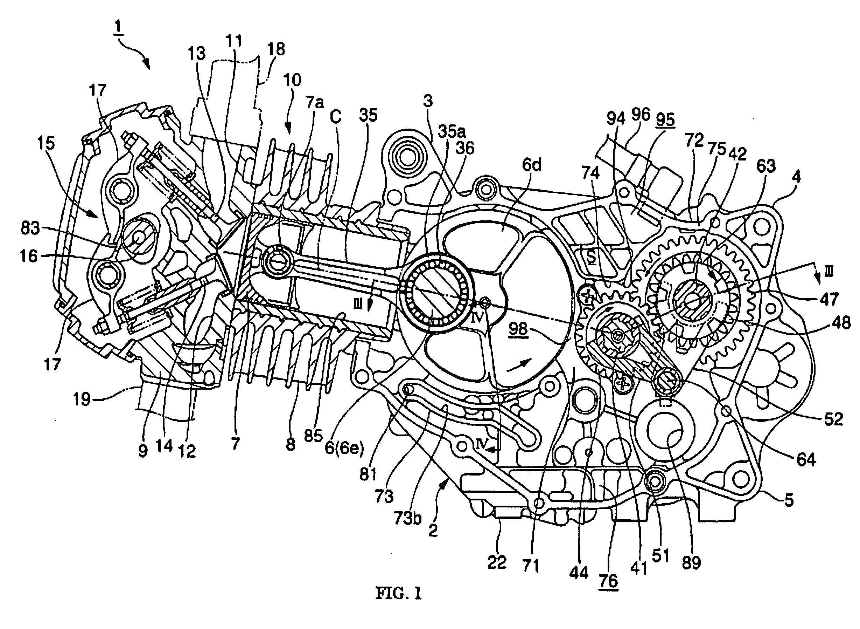

An embodiment of an engine according to the invention will be described in detail below with reference to Figs. 1 to 5.

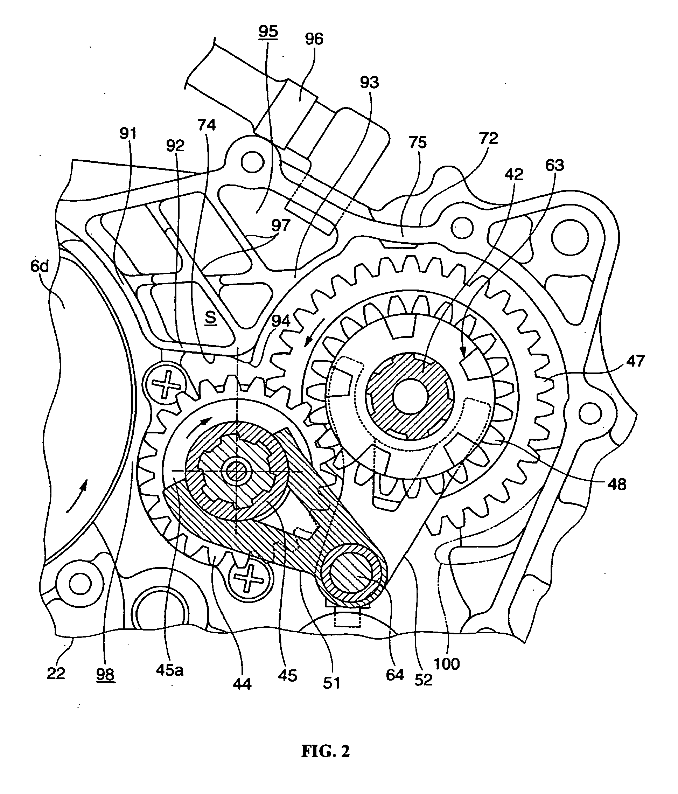

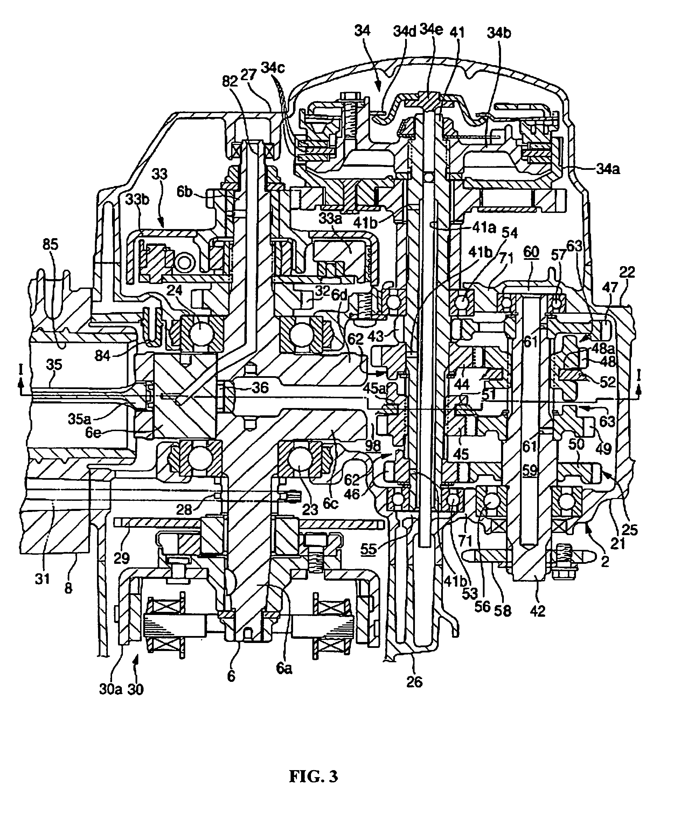

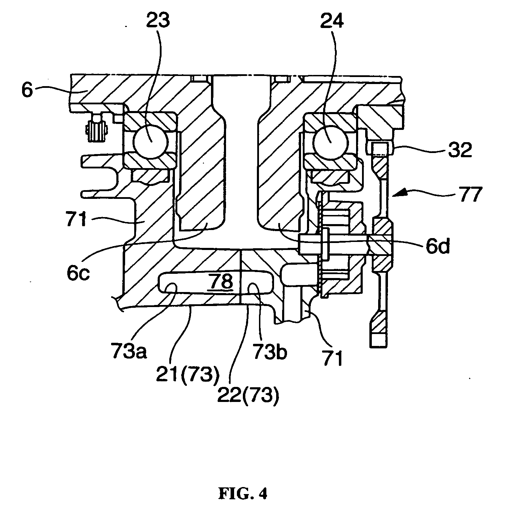

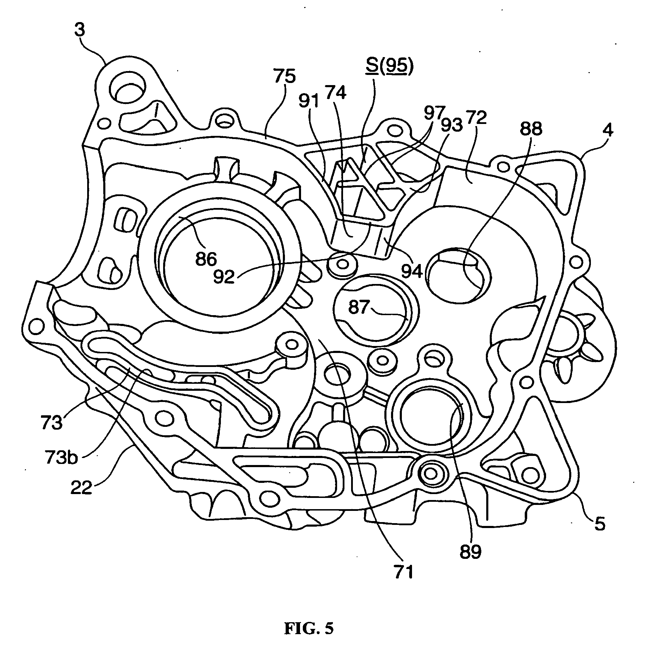

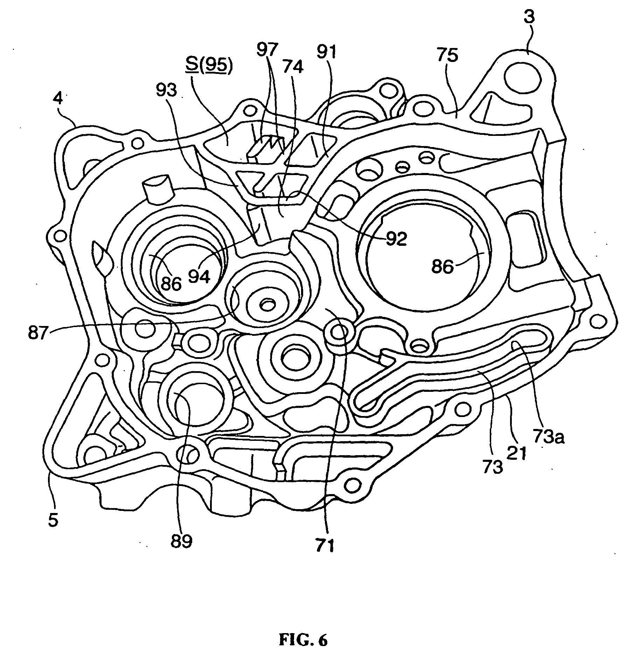

Fig. 1 is a longitudinal, cross sectional view showing an engine according to the invention. Fig. 1 depicts a state, in which a half of a crank case on the left of a vehicle body is removed. In Fig. 1, a broken position in Fig. 3 is indicated by the line III-III and a broken position in Fig. 4 is indicated by the line IV-IV. Fig. 2 is a cross sectional view showing, in enlarged scale, a part of Fig. 1 and Fig. 3 is a transverse, cross sectional view taken through line III-III of Fig. 1. In Fig. 3, the line I-I indicates the line of section of Fig. 1. Fig. 4 is a cross sectional view taken through line IV-IV of Fig. 1, and shows a region, in which a first transverse wall is formed. Fig. 5 is a perspective view showing a state, in which a half of the crank case on the right of the vehicle body is viewed from a center of the vehicle body, and Fig. 6 is a perspective view showing a state, in which a half of the crank case on the left of the vehicle body is viewed from a center of the vehicle body.

In these drawings, the reference numeral 1 denotes an engine according to the embodiment. The engine 1 is an air-cooled type four-stroke single-cylinder engine and is mounted on a vehicle frame of a motorcycle (not shown). The engine 1 is mounted on the vehicle frame by fixing three mount brackets 3 to 5 provided on the crank case 2 of the engine 1 to an engine mount seat of the vehicle frame by means of fixation bolts.

As shown in Fig. 1, the engine 1 includes the crank case 2, which supports a crank shaft 6 rotatably, a cylinder body 8, into which a piston 7 is fitted and inserted, and a cylinder head 9 mounted to a tip or top end (front end) of the cylinder body 8. The cylinder body 8 is mounted to a front end of the crank case 2 with an axis C of a cylinder directed and tilted slightly upwardly of the front of the vehicle body. The cylinder body 8 and the cylinder head 9 constitute a forward tilting cylinder 10 referred to in the invention.

The cylinder head 9 is formed with an intake port 11 and an exhaust port 12 and provided with an intake valve 13, an exhaust valve 14, and a valve operating device 15, which drives the intake and exhaust valves 13, 14. The valve operating device 15 is constructed such that rotation of a cam shaft 16, to which rotation of the crank shaft 6 is transmitted, is transmitted to the intake valve 13 and the exhaust valve 14 by a rocker arm 17.

An intake pipe 18 is connected to an upper portion of the cylinder head 9 and an exhaust pipe 19 is connected to a lower portion thereof.

As shown in Fig. 3, the crank case 2 comprises a half (referred below to as left crank-case half) 21 on the left of the vehicle body and a half (referred below to as right crank-case half) 22 on the right of the vehicle body. As shown in Fig. 3, the crank case 2 rotatably supports the crank shaft 6 with bearings 23, 24 and accommodates therein a transmission 25.

As shown in Fig. 3, a flywheel magneto cover 26 is mounted to an outside of the left crank-case half 21. As shown in Fig. 3, a clutch cover 27 is mounted to an outside of the right crank-case half 22.

As shown in Fig. 3, the crank shaft 6 comprises a left shaft portion 6a rotatably supported on the left crank-case half 21 by the bearing 23, a right shaft portion 6b rotatably supported on the right crank-case half 22 by the bearing 24, a pair of disk-shaped crank webs 6c, 6d, respectively formed integrally at ends of the shaft portions 6a, 6b toward an interior of the vehicle body, and a crank pin 6e for connection of the crank webs 6c, 6d.

Provided on the left shaft portion 6a of the crank shaft 6 are a timing chain sprocket 28, a starter motor gear 29, a rotor 30a of a flywheel magneto 30, etc. The timing chain sprocket 28 is connected to a driven sprocket (not shown) of the valve operating device 15 (see Fig. 1) through a timing chain 31.

An oil pump driving gear 32 and a centrifugal clutch 33 are provided on the right shaft portion 6b of the crank shaft 6. The centrifugal clutch 33 includes a clutch shoe 33a rotating integrally with the crank shaft 6 and a clutch outer 33b, with which the clutch shoe 33a is caused by a centrifugal force to contact. The clutch outer 33b is supported rotatably on the crank shaft 6 and gear-coupled to a clutch housing 34a of a transmission clutch 34 described later.

As shown in Fig. 1, the crank pin 6e of the crank shaft 6 rotatably supports a large or big-end 35a of a connecting rod 35 through a bearing 36 (see fig. 1).

The crank shaft 6 rotates counter-clockwise in Fig. 1. That is, the crank shaft 6 rotates in a direction, in which the crank webs 6c, 6d move toward the transmission 25 from first transverse walls 73 described later.

As shown in Figs. 1 and 3, the transmission 25 comprises a main shaft 41 positioned rearwardly of the crank shaft 6, a drive shaft 42 positioned rearwardly upwardly of the main shaft 41, four gears 43 to 46 provided on the main shaft 41, four gears 47 to 50 provided on the drive shaft 42, an operating force transmission device (not shown) for movement of two shift forks 51, 52, etc.

The main shaft 41 constitutes a transmission shaft referred to in the invention, the four gears 43 to 46 provided on the main shaft 41 constitute a transmission gear referred to in the invention, and the four gears 47 to 50 provided on the drive shaft 42 constitute a further transmission gear referred to in the invention. The main shaft 41 rotates clockwise in Fig. 1 and the drive shaft 42 rotates counter-clockwise in Fig. 1. Therefore, the gears 43 to 46 on the main shaft 41 and the gears 47 to 50 on the drive shaft 42 rotate in a direction, in which upper teeth of mutually meshing gears approach each other.

As shown in Fig. 3, the main shaft 41 is rotatably supported on the crank case 2 by bearings 53, 54. The main shaft 41 is formed to extend through the right crank-case half 22 to project on the right of the vehicle body. The transmission clutch 34 is provided on an end of the main shaft 41 on the right of the vehicle body. The transmission clutch 34 includes the clutch housing 34a coupled via a gear to the centrifugal clutch 33, a clutch boss 34b positioned inside the clutch housing 34a, a plurality of friction plates 34c provided between the clutch housing 34a and the clutch boss 34b, a disc spring 34d, which biases the friction plates 34c in an axial direction, a push rod 34e, which pushes a central portion of the disc spring 34d, etc. The push rod 34e is moved rightwardly of the vehicle body by the operating force transmission device (not shown) just before a change in speed. The push rod 34e is moved rightwardly of the vehicle body against the elastic force of the disc spring 34d whereby the transmission clutch 34 shifts to a disconnected state from a connected state.

The clutch housing 34a is rotatably supported on the main shaft 41. The clutch boss 34b is spline-coupled to and supported on the main shaft 41 in a state of being movable in an axial direction and inhibited from rotating relative to the main shaft 41. Therefore, in the case where the transmission clutch 34 is put in a connected state, rotation of the centrifugal clutch 33 (the crank shaft 6) is transmitted to the main shaft 41, and in the case where the transmission clutch 34 is put in a disconnected state, transmission of rotation to the main shaft 41 is cut off.

The push rod 34e is inserted through a through-hole 41a formed in a center portion of the main shaft 41. Oil is supplied into the through-hole 41a from an oil passage 55 formed between the left crank case 2 and the flywheel magneto cover 26. The oil flows out to an outer periphery of the main shaft 41 from a plurality of oil holes 41b, which are provided on the main shaft 41 to extend radially, to lubricate supported portions, such as the gears 44, 46, the clutch housing 34a, etc., rotatably supported on the outer periphery thereof.

As shown in Figs. 1 and 2, the drive shaft 42 is positioned relative to the main shaft 41 rearwardly and obliquely upwardly of the vehicle body and supported rotatably on the crank case 2 by bearings 56, 57 as shown in Fig. 3. The drive shaft 42 is formed to extend through the left crank-case half 21 to project on the left of the vehicle body. A rear-wheel driving sprocket 58 is mounted to an end of the drive shaft 42 on the left of the vehicle body. The rear-wheel driving sprocket 58 is connected to a rear wheel through a chain (not shown).

An oil passage 59 is provided in a center portion of the drive shaft 42. Oil is supplied to the oil passage 59 from an oil passage 60 provided in the right crank-case half 22. The oil flows out to an outer periphery of the drive shaft 42 from an oil hole 61, which is formed on the drive shaft 42 to extend radially, to lubricate supported portions of gears 47, 49 rotatably supported on the outer periphery thereof.

The gear 43 positioned rightmost on the vehicle body in Fig. 3, out of the four gears 43 to 46 provided on the main shaft 41, is formed integrally on the main shaft 41. The gear 44 positioned second from the right and the gear 46 positioned leftmost, out of the four gears 43 to 46, are supported rotatably on the main shaft 41 in a state of being inhibited from moving in an axial direction. The gear 45 positioned third from the right, out of the four gears 43 to 46, is spline-coupled to and supported on the main shaft 41 in a state of being movable in an axial direction and inhibited from rotating relative to the main shaft 41, and formed with an annular groove 45a, with which the shift fork 51 engages.

Dog clutches 62 are provided on the gear 45 positioned third from the right and two gears 44, 46 positioned on both sides of the gear 45.

The four gears 47 to 50 provided on the drive shaft 42 and the four gears 43 to 46 provided on the main shaft 41 are provided to align in a longitudinal direction of the vehicle body. The gear 50 positioned leftmost in Fig. 3, out of the four gears 47 to 50 provided on the drive shaft 42, is fixed to the drive shaft 42 so as to rotate together therewith and meshes with the gear 46 on the main shaft 41.

The gear 47 positioned rightmost and the gear 49 positioned third from the right, out of the four gears 47 to 50 on the drive shaft 42, are rotatably supported on the drive shaft 42 in a state of being inhibited from moving in an axial direction. The gear 47 positioned rightmost meshes with the gear 43 on the main shaft 41 and the gear 49 positioned third from the right meshes with the gear 45 on the main shaft 41. The gear 48 positioned second from the right, out of the four gears 47 to 50 provided on the drive shaft 42, is spline-coupled to and supported on the drive shaft 42 in a state of being movable in an axial direction and inhibited from rotating relative to the drive shaft 42, and formed with an annular groove 48a, with which the shift fork 52 engages. Dog clutches 63 are provided on the gear 48 positioned second from the right and two gears 47, 49 positioned on both sides of the gear 48.

As shown in Fig. 1, the shift forks 51, 52 are rotatably supported on a guide rod 64 provided crosswise in the crank case 2. The shift forks 51, 52 are moved by a cam of a shift drum (not shown) arranged below and in the vicinity of the guide rod 64 in a vehicle width direction so as to interlock with a shift operation. The shift drum is connected to a shift pedal, which is manipulated by an occupant's foot, through the operating force transmission device (not shown) .

As shown in Figs. 1 and 3 to 6, formed integral with the left crank-case half 21 and the right crank-case half 22 of the crank case 2 are vertically and longitudinally extending longitudinal walls 71, outer walls 72 (see Figs. 5 and 6) extending centrally in the vehicle width direction from vertical, longitudinal tip ends of the longitudinal walls 71, first transverse walls 73 positioned below and in the vicinity of the crank webs 6c, 6d and curved along outer peripheral surfaces of the crank webs 6c, 6d, second transverse walls 74 positioned above and in the vicinity of the four gears 43 to 46 on the main shaft 41 to cover upper portions of the gears, etc.

The left crank-case half 21 and the right crank-case half 22 are joined to each other by a clamping bolt (not shown) in a state, in which the outer walls 72, 72, the first transverse walls 73, 73, and the second transverse walls 74, 74 are brought into contact with each other. Mating surfaces of the left crank-case half 21 and the right crank-case half 22 are denoted by the reference numeral 75 in Figs. 1, 2, 5, and 6.

Also, lower ends of the left crank-case half 21, the right crank-case half 22, and the clutch cover 27 are formed so as to define an oil pan 76 (see Fig. 1).

An oil pump 77 is mounted to the longitudinal wall 71 of the right crank-case half 22, out of the two longitudinal walls 71, 71 as shown in Fig. 4. The oil pump 77 adopts a construction, in which oil drawn from the oil pan 76 is discharged into a main gallery 78 formed in the first transverse wall 73. The main gallery 78 is formed by mutually mating a concave groove 73a formed in the first transverse wall 73 of the left crank-case half 21 and a concave groove 73b formed in the first transverse wall 73 of the right crank-case half 22. As shown in Fig. 1, the concave grooves 73a, 73b are formed to extend in a longitudinal direction so as to extend over a total region of the first transverse walls 73.

An end of the main gallery 78 on the vehicle front side is connected to an oil filter (not shown) through an oil passage 81 (see Fig. 1) formed in the right crank-case half 22. Oil flowing out of the oil filter is supplied to an oil passage 82 (see Fig. 3) in the crank shaft 6 and an oil passage 83 (see Fig. 1) in the cam shaft 16.

Oil supplied to the oil passage 82 in the crank shaft 6 lubricates a supported portion of the clutch outer 33b and the bearing 36, which supports the large end of the connecting rod. On the other hand, oil supplied to the oil passage 83 of the cam shaft 16 lubricates sliding portions of the cam shaft 16 and the rocker arm 17. Also, a volume of oil supplied to the cam shaft 16 is jetted into a cylinder hole 85 from an oil jet hole 84 provided in the vicinity of a region, in which the right crank-case half 22 and the cylinder body 8 are connected together, as shown in Fig. 3. The oil as jetted lubricates the piston 7, the cylinder wall surface, a piston pin 7a (see Fig. 1), etc.

An end of the oil gallery 78 on the vehicle rear side is connected to the oil passage 55 formed on the left crank-case half 21 and the oil passage 60 formed on the right crank case 2.

As shown in Figs. 5 and 6, formed on the longitudinal wall 71 of the left crank-case half 21 and the longitudinal wall 71 of the right crank-case half 22 are circular holes 86, into which the bearings 23, 24 for the crank shaft 6 are fitted, circular holes 87, into which the bearings 53, 54 for the main shaft 41 are fitted, circular holes 88, into which the bearings 56, 57 for the drive shaft 42 are fitted, circular holes 89, into which the bearings for the shift drum are fitted.

The first transverse walls 73 are protrusively provided on the longitudinal walls 71 to be directed centrally in the vehicle width direction. The first transverse walls 73 are formed below and in the vicinity of the crank webs 6c, 6d to extend in longitudinal direction of the vehicle body and function as partitions, which compartment an interior of the crank case 2 into one toward the crank webs 6c, 6d and one toward the oil pan 76.

As shown in Figs. 1 and 2, the second transverse walls 74 are formed at upper ends of the outer walls 72 to extend downward from a central portion of the vehicle body in a longitudinal direction. Specifically, the second transverse walls 74 comprise, as shown in Fig. 2, forwardly tilting walls 91 extending rearwardly downwardly along outer peripheral surfaces of the crank webs 6c, 6d, bottom walls 92 extending obliquely and rearwardly downwardly from lower ends of the forwardly tilting walls 91, and rearwardly tilting walls 93 extending rearwardly upwardly and obliquely from lower ends (rear ends) of the bottom walls 92.

The bottom walls 92 are formed to extend above the main shaft 41 and from an end of the main shaft on the left of the vehicle body to an end thereof on the right of the vehicle body in the crank case 2. Also, the bottom walls 92 are formed to tilt rearwardly downwardly in a state, in which the engine 1 is mounted on the vehicle frame.

The forwardly tilting walls 93 are formed to extend along and in the vicinity of the gear 47 having a largest outside diameter among the four gears 47 to 50 on the drive shaft 42. Rear ends of the rearwardly tilting walls 93, that is, ends of the second transverse walls 74 on the vehicle rear side are connected to the outer walls 72 extending substantially horizontally at the upper end of the crank case 2.

The rearwardly tilting walls 93 and the substantially horizontal, outer walls 72 are formed to be shaped to surround upper portions of the four gears 47 to 50 provided on the drive shaft 42 from above and rear. That is, the second transverse walls 74 are formed so as to extend in the longitudinal direction of the vehicle body from above and in the vicinity of a region, in which the four gears 43 to 46 on the main shaft 41 and the four gears 47 to 50 on the drive shaft 42 mesh mutually.

Downwardly projecting projections 94 are formed on boundary regions of the bottom walls 92 and the rearwardly tilting walls 93.

The projections 94 are formed to have a triangular-shaped cross section directed rearwardly and obliquely downwardly as shown in Fig. 2 and formed on the bottom walls 92 of the second transverse walls 74 to extend over whole regions thereof in the vehicle width direction as shown in Figs. 5 and 6. Also, positions, in which the projections 94 are formed, in the longitudinal direction are positioned rearwardly of an axis of the main shaft 41 toward the rear of the vehicle body as viewed in an axial direction of the main shaft 41 as shown in Fig. 2.

The projections 94 are formed on the second transverse walls 74 in this manner whereby the projections 94 are positioned above and in the vicinity of a region, in which the four gears 43 to 46 on the main shaft 41 and the four gears 47 to 50 on the drive shaft 42 mesh mutually, as shown in Fig. 2. Further, the projections 94 are positioned above and in the vicinity of a region, in which the annular groove 45a of the gear 45 and the shift fork 51 engage with each other.

The second transverse walls 74 according to the embodiment are formed to be downwardly convex in shape as described above. Therefore, according to the embodiment, the second transverse walls 74 are positioned inside the crank case 2 relative to the outer walls 72, so that a space S is defined between the second transverse walls 74 and the outer walls 72.

According to the embodiment, the space S defines a breather chamber 95 for separation of oil from blow-by gases. An interior of the breather chamber 95 is communicated to an interior of the crank case 2 through a blow-by gas inlet (not shown) and connected to an air cleaner (not shown) by a breather hose 96 mounted to the outer walls 72 of the crank case 2. A plurality of partitions 97 are provided in the breather chamber 95 so that a passage having a labyrinth structure is formed between the blow-by gas inlet and the breather hose 96.

In the engine 1 according to the embodiment, an oil scattered space 98 extending vertically in the vicinity of the outer peripheral surfaces of the crank webs 6c, 6d is formed between the second transverse walls 74 and the first transverse walls 73 as shown in Figs. 1 to 3. Specifically, the oil scattered space 98 is formed to extend rearwardly upwardly toward the second transverse walls 74 from the first transverse walls 73 between the crank webs 6c, 6d and the four gears 43 to 46 on the main shaft 41 as shown in Fig. 2. That is, the forwardly tilting walls 91 and the bottom walls 92 of the second transverse walls 74 define a ceiling wall of the oil scattered space 98.

With the engine 1 constructed in this manner, oil supplied to the connecting rod large or big-end bearing 36 mainly from the oil passage 82 in the crank shaft 6 and oil supplied into the cylinder hole 85 from the oil jet hole 84 lubricate portions to be lubricated and then are discharged into the crank case 2 in running. The oil flows down going along the longitudinal walls 71 of the crank case 2 and other regions as it is liquid and becomes misty to drop in the crank case 2. A part of the oil flows down to or falls on the first transverse walls 73 to stay on the first transverse walls 73.

The oil on the first transverse walls 73 comes into contact with the rotating crank webs 6c, 6d when its liquid level rises to substantially the same level as lower ends of the crank webs 6c, 6d. Since the crank webs 6c, 6d rotate at high speed, oil on the first transverse walls 73, which comes into contact with the crank webs 6c, 6d, is flown or displaced rearwardly upwardly in the oil scattered space 98 by a centrifugal force. On the other hand, oil coming into contact with the crank webs 6c, 6d in the course of dropping, out of a volume of oil becoming misty and drifting in the crank case 2, is also flown or displaced around the crank webs 6c, 6d by a centrifugal force to flow down adhering to the first transverse walls 73 and the longitudinal walls 71 of the crank case 2, or is flown rearwardly upwardly in the oil scattered space 98 together with oil flown from above the first transverse walls 73 as described above.

A volume of oil flown into the oil scattered space 98 adheres directly to the gears 43 to 46 on the main shaft 41 and the remaining oil passes through clearances between the gears 43 to 46 and the crank webs 6c, 6d to strike against the forwardly tilting walls 91 and the bottom walls 92 of the second transverse walls 74 to adhere to the walls 91, 92. That is, oil flown in a wide range by the crank webs 6c, 6d and scattered rearwardly upwardly of the gears 43 to 46 can be received by the second transverse walls 74.

The oil adhering to the second transverse walls 74 in this manner goes along lower surfaces of the bottom walls 92 to flow down due to gravity and collected on the projections 94 to drip from the projections 94. In this manner, the oil dripping from the projections 94 strikes against teeth of the gears 43 to 46 of the main shaft 41 positioned below the projections 94 to lubricate the teeth and teeth of the gears 47 to 50 of the drive shaft 42 which mesh with the former teeth.

Accordingly, according to the embodiment, oil discharged into the crank case 2 to flow down onto the first transverse walls 73 is caused by rotation of the crank webs 6c, 6d to adhere to the second transverse walls 74 and the oil is caused to drip onto the gears 43 to 46 of the transmission 25 from the projections 94 of the second transverse walls 74, thereby enabling lubricating the gears 43 to 46 of the main shaft 41 and the gears 47 to 50 of the drive shaft 42.

Therefore, as compared with a conventional engine 1, in which an oil spraying part such as a pipe formed separately from a crank case 2 is used to spray oil onto a transmission 25, it is possible according to the embodiment to achieve miniaturization by an extent corresponding to a space occupied by the part, and besides, it is possible to achieve reduction in manufacturing cost owing to a decrease in the number of parts. In the case where a cylinder tilts forwardly as in the engine 1 according to the embodiment, oil (oil having lubricated the piston 7, the cylinder wall surface, and the piston pin 7a) jetted into the cylinder hole 85 is hard to fall on the crank shaft 6 and so hard to fly rearward as compared with a construction, in which a cylinder is upright.

However, the embodiment is adopted to enable the first transverse walls 73 to collect a part of a large quantity of oil having lubricated the piston 7 to fly the same toward the transmission 25, so that it is possible to supply a large quantity of oil to the gears 43 to 50 of the transmission 25 although the cylinder tilts forwardly.

Accordingly, it is possible according to the embodiment to manufacture an engine capable of restricting wear of the gears 43 to 50 of the transmission 25 to a small extent in spite of being small in size and inexpensive.

According to the embodiment, the first transverse walls 73 are formed on the crank case 2 as partitions, which compartment an interior of the crank case 2 into one toward the crank webs 6c, 6d and one toward the oil pan 76. Therefore, with the engine 1, the first transverse walls 73 can inhibit oil stored in the oil pan 76 from flowing toward the crank webs 6c, 6d. Accordingly, the crank webs 6c, 6d do not agitate oil unnecessarily but it is possible to reduce power loss, because the crank webs 6c, 6d agitate oil.

With the engine 1 according to the embodiment, the space S is defined between the second transverse walls 74 and the outer walls 72 of the crank case 2. The space S substantially functions as a space for heat insulation. Therefore, while the engine operates, the second transverse walls 74 are prevented from being exposed directly to an outside air to be cooled excessively. That is, since the second transverse walls 74 and oil adhering to the second transverse walls 74 can be maintained at a predetermined temperature, the oil adhering to the second transverse walls 74 is prevented from being cooled excessively to become unnecessarily high in viscosity.

Therefore, according to the embodiment, oil adhering to the second transverse walls 74 adheres to the bottom walls 92 and immediately thereafter flows down toward the projections 94, so that oil does not solidify in a state of adhering to the second transverse walls 74 and a substantially whole quantity of the oil adhering to the second transverse walls 74 is enabled to drip onto the gears 43 to 46. It is therefore possible according to the embodiment to provide an engine, in which wear of the gears 43 to 50 of the transmission 25 is further restricted.

According to the embodiment, the breather chamber 95 is formed making use of the space S between the second transverse walls 74 and the outer walls 72 of the crank case 2 and the second transverse walls 74 are used to define walls of the breather chamber 95. Therefore, miniaturization of the crank case 2 can be achieved as compared with the case where the second transverse walls 74 and walls of the breather chamber 95 are formed separately.

According to the embodiment, oil dripping from the projections 94 on the second transverse walls 74 adheres to sides of the gears 43 to 46 of the main shaft 41 toward the rear of a vehicle relative to topmost portions thereof. At this time, those teeth, to which oil adheres, move downward owing to clockwise rotation of the gears in Fig. 1, so that oil dripping from the projections 94 is made hard to splash when striking against the teeth.

Therefore, according to the embodiment, it is possible to surely have oil, which has dripped from the projections 94 of the second transverse walls 74, adhering to teeth of the gears 43 to 46 of the main shaft 41. Accordingly, it is possible according to the embodiment to surely have oil, which has dripped from the projections 94 of the second transverse walls 74, adhering to teeth of the gears 43 to 46 of the main shaft 41, so that it is possible to provide an engine, in which wear of the gears 43 to 50 of the transmission 25 is further restricted.

According to the embodiment, the gear 45 on the main shaft 41 is spline-coupled to and supported on the main shaft 41 to be movable in an axial direction and further the gear 45 is formed with the annular groove 45a, with which the shift fork 51 engages. As shown in Fig. 2, the projections 94 are positioned above and in the vicinity of a region, in which the shift fork 51 and the annular groove 45a engage with each other.

Therefore, according to the embodiment, oil dripping from the projections 94 of the second transverse walls 74 adheres to a region, in which the shift fork 51 and the annular groove 45a of the main-shaft side gear 45 engage with each other, and to a spline-coupled region, in which the main-shaft side gear 45 and the main shaft 41 are spline-coupled, to lubricate the sliding regions. Accordingly, it is possible according to the embodiment to provide an engine, in which wear in the engaged region and the spline-coupled region is restricted.

According to the embodiment, the gears 43 to 46 of the main shaft 41 and the gears 47 to 50 of the drive shaft 42, which mesh with the former gears, are provided to align in a longitudinal direction of the vehicle body. In two gears to mesh with each other, these gears rotate in a direction, in which upper teeth of two mutually meshing gears approach each other. Also, the second transverse walls 74 are formed so as to extend in the longitudinal direction of the vehicle body from above and in the vicinity of meshing portions of the gears and the projections 94 are positioned above and in the vicinity of the meshing portions. Therefore, according to the embodiment, oil dripping from the projections 94 of the second transverse walls 74 is contacted by meshing portions of two mutually meshing gears to lubricate the meshing regions.

It is therefore possible according to the embodiment to provide an engine, in which wear of the gears is further restricted, since meshing portions of two mutually meshing gears can be lubricated directly.

According to the embodiment, the gears 47 to 50 of the drive shaft 42 rotate at high speed whereby a part of oil having adhered to the gears is flown by a centrifugal force to adhere to the rearwardly tilting walls 93 of the second transverse walls 74 and the outer walls 72 positioned in a rear, upper region of the crank case 2. Oil adhering to the walls drips therefrom to strike against the gears 47 to 50 of the drive shaft 42 and is flown rearward in a direction of rotation by the gears 47 to 50, which rotate at high speed. Consequently, the oil moves between the gears 47 to 50 of the drive shaft 42 and the both walls 72, 93 rearward (forwardly of the vehicle body) in the direction of rotation and is again led to meshing portions of the gears 43 to 46 of the main shaft 41 and the gears 47 to 50 of the drive shaft 42.

Therefore, according to the embodiment, since oil dripping from the projections 94 of the second transverse walls 74 to lubricate the gears 43 to 46 of the main shaft 41 and the gears 47 to 50 of the drive shaft 42 can be again made use of to adequately lubricate the both gears, it is possible to provide an engine, in which the gears are further hard to wear.

While the embodiment illustrates an example, in which the space S between the second transverse walls 74 and the outer walls 72 of the crank case 2 is made use of to define the breather chamber 95, an engine according to the invention is not limited thereto but the breather chamber 95 may not be formed in the spaces S. Also, the outer walls 72 opposed to the second transverse walls 74 may be used to form a bracket for mounting of an engine and a recess formed in the bracket with a view to lightening may be made the space S.

Also, third transverse walls 100 facing an interior of the crank case 2 along the gears 47 to 50 of the drive shaft 42 as viewed in an axial direction of the drive shaft 42 can be formed on the outer walls 72 formed at the rear end of the crank case 2 as indicated by two-dot chain lines in Fig. 2. The third transverse walls 100 are formed in this manner whereby the third transverse walls 100 can receive oil dropping from meshing portions of the gears 43 to 50, so that it is possible to increase the quantity of oil, which is fed to the meshing portions by rotation of the gears 47 to 50 of the drive shaft 42 to be reused.

### Description of Reference Numerals and Signs

1: engine, 2: crank case, 6: crank shaft, 6c, 6d: crank web, 7: piston, 8: cylinder body, 9: cylinder head, 21: left crank-case half, 22: right crank-case half, 25: transmission, 41: main shaft, 42: drive shaft, 43 to 50: gear, 45a: annular groove, 51, 52: shift fork, 71: longitudinal wall, 72: outer wall, 73: first transverse wall, 74: second transverse wall, 94: projection, 95: breather chamber, 98: oil scattered space

## Claims

1. An engine (1) comprising:
a crank case (2);
a crank shaft (6) rotatably supported in the crank case (2) and having a crank web (6c, 6d); and
a transmission (25) including transmission gears (43 to 50),
wherein the crank case (2) comprises:
a first transverse wall (73) positioned below and in the vicinity of the crank web (6c, 6d) and curved along an outer peripheral surface of the crank web (6c, 6d), wherein the crank shaft (6) rotates in a direction in which the crank web (6c, 6d) is moved toward the transmission (25) from the first transverse wall (73);
a second transverse wall (74) positioned above and in the vicinity of the transmission gears (43 to 50) to cover an upper portion of the transmission gears (43 to 50), wherein the second transverse wall (74) is formed with a projection (94), wherein a plurality of the transmission gears (47 to 50) are located on a driveshaft (42) and the second transverse wall (74) extends along and in the vicinity of a transmission gear (47) having a largest diameter among the transmission gears (47 to 50) on the driveshaft (42); and
an oil scattered space (98) extending between the first and second transverse walls (73, 74) in the vicinity of an outer peripheral surface of the crank web (6c, 6d).

2. The engine (1) according to claim 1, wherein the projection (94) extends downwardly from the second transverse wall (74).

3. The engine (1) according to claim 1 or 2, wherein the first transverse wall (73) defines a partition which compartments an interior of the crank case (2) into a first compartment located toward the crank web (6c, 6d) and a second compartment located toward an oil pan (76).

4. The engine (1) according to claim 1, 2 or 3, wherein the second transverse wall (74) is positioned interiorly of the crank case (2) relative to an outer wall (72) of the crank case (2), and a space (95) is defined between the second transverse wall (74) and the outer wall (72).

5. The engine (1) according to claim 4, wherein the space (95) constitutes a breather chamber for separation of oil from blow-by gases.

6. The engine (1) according to any preceding claim, wherein the projection (94) is positioned toward a rear of the engine (1), and the transmission gear (43 to 46) rotates in a direction in which a topmost portion of the transmission gear (43 to 46) moves toward the rear of the engine (1).

7. The engine (1) according to any preceding claim, wherein a transmission gear (45) is spline-fitted onto and supported on a transmission shaft (41) to be movable in an axial direction and formed with a groove (45a) adapted to be engaged by a shift fork (51), and the projection (94) is positioned above and in the vicinity of a region in which the shift fork (51) engages the groove (45a).

8. The engine (1) according to any preceding claim, comprising first and second intermeshing gears (43 to 46, 47 to 50), wherein the first and second gears (43 to 50) are arranged to align in a longitudinal direction of the engine (1).

9. The engine (1) according to claim 8, wherein the first and second gears (43 to 50) rotate in a direction in which upper teeth of the respective gears (43 to 50) approach each other.

10. The engine (1) according to claim 8 or 9, wherein the second transverse wall (74) is formed to extend in the longitudinal direction of the engine (1) from above and the vicinity of meshing portions of the gears (43 to 50).

11. The engine (1) according to claim 8, 9 or 10, wherein the projection (94) is positioned above and in the vicinity of the meshing portions of the gears (43 to 50).

12. The engine (1) according to any one of claims 8 to 11, wherein an end of the second transverse wall (74) toward the rear of the engine (1) is connected to an outer wall (72) of the crank case (2) extending in an engine (1) width direction, and the second transverse wall (74) and the outer wall (72) are formed in a shape to surround an upper portion of the second gear (47 to 50) from above and behind.

13. The engine (1) according to any preceding claim, further comprising a cylinder extending from the crank case (2).

14. A vehicle comprising an engine (1) according to any preceding claim.

## Patentansprüche

1. Motor (1), der Folgendes umfasst:
ein Kurbelgehäuse (2),
eine Kurbelwelle (6), die drehbar in dem Kurbelgehäuse (2) getragen wird und eine Kurbelwange (6c, 6d) hat, und
ein Getriebe (25), das Getriebezahnräder (43 bis 50) einschließt,
wobei das Kurbelgehäuse (2) Folgendes umfasst:
eine erste Querwand (73), die unterhalb und in der Nachbarschaft der Kurbelwange (6c, 6d) angeordnet und längs einer Außenumfangsfläche der Kurbelwange (6c, 6d) gewölbt ist, wobei sich die Kurbelwelle (6) in einer Richtung dreht, in der die Kurbelwange (6c, 6d), von der ersten Querwand (73) aus zu dem Getriebe (25) hin bewegt wird,
eine zweite Querwand (74), die oberhalb und in der Nachbarschaft der Getriebezahnräder (43 bis 50) angeordnet ist, um einen oberen Abschnitt der Getriebezahnräder (43 bis 50) abzudecken, wobei die zweite Querwand (74) mit einem Vorsprung (94) geformt ist, wobei mehrere der Getriebezahnräder (43 bis 50) auf einer Antriebswelle (42) angeordnet sind und sich die zweite Querwand (74) längs und in der Nachbarschaft eines Getriebezahnrades (47) erstreckt, das unter den Getriebezahnrädern (43 bis 50) auf der Antriebswelle (42) einen größten Durchmesser hat, und
einen Ölstreuraum (98), der sich zwischen der ersten und der zweiten Querwand (73, 74) in der Nachbarschaft einer Außenumfangsfläche der Kurbelwange (6c, 6d) erstreckt.

2. Motor (1) nach Anspruch 1, wobei sich der Vorsprung (94) von der zweiten Querwand (74) aus nach unten erstreckt.

3. Motor (1) nach Anspruch 1 oder 2, wobei die erste Querwand (73) eine Trennwand definiert, die ein Inneres des Kurbelgehäuses (2) in eine erste Abteilung, die zu der Kurbelwange (6c, 6d) hin angeordnet ist, und eine zweite Abteilung, die zu einer Ölwanne (76) hin angeordnet ist, unterteilt.

4. Motor (1) nach Anspruch 1, 2 oder 3, wobei die zweite Querwand (74) innerhalb des Kurbelgehäuses (2) im Verhältnis zu einer Außenwand (72) des Kurbelgehäuses (2) angeordnet ist und zwischen der zweiten Querwand (74) und der Außenwand (72) ein Raum (95) definiert wird.

5. Motor (1) nach Anspruch 4, wobei der Raum (95) eine Entlüftungskammer zum Abscheiden von Öl aus durchblasenden Gasen darstellt.

6. Motor (1) nach einem der vorhergehenden Ansprüche, wobei der Vorsprung (94) zu einer Rückseite des Motors (1) hin angeordnet ist und sich das Getriebezahnrad (43 bis 46) in einer Richtung dreht, in der sich ein oberster Abschnitt des Getriebezahnrades (43 bis 46) zu der Rückseite des Motors (1) hin bewegt.

7. Motor (1) nach einem der vorhergehenden Ansprüche, wobei ein Getriebezahnrad (45) auf einer Getriebewelle (41) kerbverzahnt ist und auf derselben getragen wird, um in einer axialen Richtung bewegt zu werden, und mit einer Rille (45a) geformt ist, die dafür eingerichtet ist, durch eine Schaltgabel (51) in Eingriff genommen zu werden, und der Vorsprung (94) oberhalb und in der Nachbarschaft eines Bereichs angeordnet ist, in dem die Schaltgabel (51) die Rille (45a) in Eingriff nimmt.

8. Motor (1) nach einem der vorhergehenden Ansprüche, der erste und zweite ineinandergreifende Zahnräder (43 bis 46, 47 bis 50) umfasst, wobei die ersten und die zweiten Zahnräder (43 bis 50) dafür angeordnet sind, sich in einer Längsrichtung des Motors (1) auszurichten.

9. Motor (1) nach Anspruch 8, wobei sich die ersten und die zweiten Zahnräder (43 bis 50) in einer Richtung bewegen, in der sich die oberen Zähne der Zahnräder (43 bis 50) einander annähern.

10. Motor (1) nach Anspruch 8 oder 9, wobei die zweite Querwand (74) so geformt ist, dass sie sich in der Längsrichtung des Motors (1) von oberhalb und der Nachbarschaft von Eingriffsabschnitten der Zahnräder (43 bis 50) aus erstreckt.

11. Motor (1) nach Anspruch 8, 9 oder 10, wobei der Vorsprung (94) oberhalb und in der Nachbarschaft der Eingriffsabschnitte der Zahnräder (43 bis 50) angeordnet ist.

12. Motor (1) nach einem der Ansprüche 8 bis 11, wobei ein Ende der zweiten Querwand (74) zu der Rückseite des Motors (1) hin mit einer Außenwand (72) des Kurbelgehäuses (2), die sich in einer Breitenrichtung des Motors (1) erstreckt, verbunden ist und die zweite Querwand (74) und die Außenwand (72) in einer Gestalt geformt sind, um einen oberen Abschnitt des zweiten Zahnrades (47 bis 50) von oben und hinten zu umschließen.

13. Motor (1) nach einem der vorhergehenden Ansprüche, der ferner einen Zylinder umfasst, der sich von dem Kurbelgehäuse (2) aus erstreckt.

14. Fahrzeug, das einen Motor (1) nach einem der vorhergehenden Ansprüche umfasst.

## Revendications

1. Moteur (1), comprenant :
un carter de moteur (2) ;
un vilebrequin (9), supporté de manière rotative dans le carter de moteur (2) et comportant un bras de manivelle (6c, 6d) ; et
une transmission (25), englobant des engrenages de transmission (43 à 50) ;
le carter de moteur (2) comprenant :
une première paroi transversale (73), positionnée au-dessous et au voisinage du bras de manivelle (6c, 6d), et courbée le long d'une surface périphérique externe du bras de manivelle (6c, 6d), le vilebrequin (6) tournant dans une direction dans laquelle le bras de manivelle (6c, 6d) est déplacé vers la transmission (25) à partir de la première paroi transversale (73) ;
une deuxième paroi transversale (74) agencée au-dessus et au voisinage des engrenages de transmission (43 à 50) pour couvrir une partie supérieure des engrenages de transmission (43 à 50), la deuxième paroi transversale (74) comportant une saillie (94), plusieurs engrenages de transmission (43 à 50) étant agencés sur un arbre d'entraînement (42), et la deuxième paroi transversale (74) s'étendant le long et au voisinage d'un engrenage de transmission (47) ayant le diamètre le plus grand parmi les engrenages de transmission (47 à 50) sur l'arbre d'entraînement (42) ; et
un espace à diffusion d'huile (98), s'étendant entre les première et deuxième parois transversales (73, 74), au voisinage d'une surface périphérique externe du bras de manivelle (6c, 6d).

2. Moteur (1) selon la revendication 1, dans lequel la saillie (94) s'étend vers le bas à partir de la deuxième paroi transversale (74).

3. Moteur (1) selon les revendications 1 ou 2, dans lequel la première paroi transversale (73) définit une cloison séparant une partie interne du carter de moteur (2) en un premier compartiment, agencé en direction du bras de manivelle (6c, 6d), et un deuxième compartiment, agencé en direction du carter d'huile (76).

4. Moteur (1) selon les revendications 1, 2 ou 3, dans lequel la deuxième paroi transversale (74) est positionnée à l'intérieur du carter de moteur (2) par rapport à une paroi externe (72) du carter de moteur (2), un espace (95) étant défini entre la deuxième paroi transversale (74) et la paroi externe (72).

5. Moteur (1) selon la revendication 4, dans lequel l'espace (95) constitue une chambre de reniflard pour séparer l'huile des gaz de fuite.

6. Moteur (1) selon l'une quelconque des revendications précédentes, dans lequel la saillie (94) est positionnée en direction d'une partie arrière du moteur (1), l'engrenage de transmission (43 à 46) tournant dans une direction dans laquelle la partie supérieure extrême de l'engrenage de transmission (43 à 46) se déplace vers la partie arrière du moteur (1).

7. Moteur (1) selon l'une quelconque des revendications précédentes, dans lequel un engrenage de transmission (45) est fixé par clavettes sur un arbre de transmission (41) et supporté par celui-ci, pour permettre un déplacement dans une direction axiale, et comporte une rainure (45a) adaptée pour s'engager dans une fourchette de débrayage (51), la saillie (94) étant positionnée au-dessus et au voisinage d'une région dans laquelle la fourchette de débrayage (51) s'engage dans la rainure (45a).

8. Moteur (1) selon l'une quelconque des revendications précédentes, comprenant des premier et deuxième engrenages à engrènement (43 à 46, 47 à 50), les premier et deuxième engrenages (43 à 50) étant agencés de sorte à être alignés dans une direction longitudinale du moteur (1).

9. Moteur (1) selon la revendication 8, dans lequel les premier et deuxième engrenages (43 à 50) tournent dans une direction dans laquelle les dents supérieures des engrenages respectifs (43 à 50) se rapprochent les unes des autres.

10. Moteur (1) selon les revendications 8 ou 9, dans lequel la deuxième paroi transversale (74) est formée de sorte à s'étendre dans la direction longitudinale du moteur (1), d'au-dessus et à partir du voisinage des parties à engrènement des engrenages (43 à 50).

11. Moteur (1) selon les revendications 8, 9 ou 10, dans lequel la saillie (94) est positionnée au-dessus et au voisinage des parties à engrènement des engrenages (43 à 50).

12. Moteur (1) selon l'une quelconque des revendications 8 à 11, dans lequel une extrémité de la deuxième paroi transversale (74), vers la partie arrière du moteur (1), est connectée à une paroi externe (72) du carter de moteur (2), s'étendant dans une direction de la largeur du moteur (1), la deuxième paroi transversale (74) et la paroi externe (72) étant formées en une forme telle à entourer une partie supérieure du deuxième engrenage (47 à 50), d'en haut et à partir de l'arrière.

13. Moteur (1) selon l'une quelconque des revendications précédentes, comprenant en outre un cylindre s'étendant à partir du carter de moteur (2).

14. Véhicule, comprenant un moteur (1) selon l'une quelconque des revendications précédentes.
